# EUROPEAN PATENT APPLICATION

(11) **EP 2 752 134 A1**
(43) Date of publication of application: **09.07.2014**
(21) Application number: 13150164.5
(22) Date of filing: 03.01.2013
(51) Int. Cl.: A47B 96/02, F16M 13/02

(54) **Utility corner shelf bracket**

(71) Applicant: Microdel Ltd., Moshav Mashen (IL)
(72) Inventor: Baruch, Erez, Rehovot (IL)
(74) Representative: Modiano, Micaela Nadia

(57) **Abstract**

A utility corner shelf bracket (100) which enables easy installation and removal, which is done quickly and without requiring any tools. A utility corner shelf bracket is provided and a shelf (102) is placed upon it, said shelf bracket is based on bows (11, 12) which are capable of bending on one plane and durable to loads perpendicular to this plane and a tensioning system (20) which enables adjustment to the wall corner prior to installation and fastening to the wall during installation.

## Description

### FIELD OF THE INVENTION

The present invention relates to a shelf bracket, and, more particularly, to a utility corner shelf bracket.

### BACKGROUND OF THE INVENTION

The need for installing shelves at intersections of structure walls or ends of furniture, which form corners, has existed for many generations. Many solutions are based on placing a shelf on a bracket, which has been fixed to the corner walls at the desired height.

A corner bracket is described in U.S. Pat. No. 1,325,143 (1919) of Conterio, which is incorporated by reference for all purposes as if fully set forth herein.

A shelf assembly and a support bracket are described in U.S. Pat. No. 4,555,082 (1985) of Sack, et al. which is incorporated by reference for all purposes as if fully set forth herein. This solution is supposed to overcome the limitations of previous solutions, including that of Conterio. These limitations also include being assembled of many separate components, whose assembly is expensive and time consuming, while also being aesthetically unpleasant to the sight.

However, even the solution of Sack, et al. has its faults, particularly the need for mounting means, such as nails or screws that are partially inserted into a pair of walls that form a corner before the installment of the shelf assembly.

None of the prior art devices enable easy installment and removal, which are done quickly and without requiring tools, of a utility corner shelf bracket, upon which a corner shelf is mounted.

There is therefore a need for a utility corner shelf bracket which enables easy installation and removal, which are done quickly and without requiring tools, and upon which a shelf can be mounted, and it would be advantageous if additional accessories could be engaged, for the purpose of bearing loads.

### SUMMARY OF THE INVENTION

An embodiment of the present invention is described herein below in which a utility corner shelf bracket can be easily installed and removed, quickly and without requiring tools, and a shelf can be mounted upon it. The utility corner shelf bracket according to the present invention is composed of two external arced elastic bows and an internal arced elastic bow. Upon the external surface of one of the external elastic bows are insertion means and pulling means. Installation of the utility corner shelf bracket according to the present invention is an extremely simple process which includes manual tensioning, similar to tensioning a bow prior to shooting an arrow, placing it where it should be in the corner, releasing the manual tension, and applying pulling force between the bows with the pulling means, causing the insertion means to be inserted into the walls. Afterwards, all that remains to be done is to place a corner shelf on the utility corner shelf bracket. Removal is done by performing similar actions in reverse order. These actions can be performed in a matter of seconds.

Additional objects and advantages of the invention will be set forth in part in the description which follows and, in part, will be obvious from the description, or may be learned by practice of the invention.

### BRIEF DESCRIPTION OF THE DRAWINGS

Figure 1 is an isometric schematic illustration of an illustrative, exemplary of a utility corner shelf bracket, according to the present invention.
Figure 2 is a top schematic illustration of an illustrative, exemplary first embodiment of a utility corner shelf bracket, installed in a corner wall, according to the present invention.
Figure 3 is an isometric schematic illustration of an illustrative, exemplary first embodiment of a utility corner shelf bracket, at a stage prior to installation, according to the present invention.
Figure 4 is a top schematic illustration of an illustrative, exemplary first embodiment of a utility corner shelf bracket, in a corner wall, at a stage prior to installation, according to the present invention.
Figure 5 is an isometric schematic illustration of an illustrative, exemplary first embodiment of a utility corner shelf bracket, and a shelf, at a stage prior to placing the shelf on the utility corner shelf bracket, according to the present invention.
Figure 6 is a right side schematic illustration of an illustrative, exemplary first embodiment of a utility corner shelf bracket, and a shelf, at a stage following placing the shelf on the utility corner shelf bracket, according to the present invention.
Figure 7a is a top schematic illustration of an illustrative, exemplary second embodiment of a utility corner shelf bracket, according to the present invention.
Figure 7b is an isometric schematic illustration of an illustrative, exemplary second embodiment of a utility corner shelf bracket, and a shelf, according to the present invention.
Figure 8a is a top schematic illustration of an illustrative, exemplary third embodiment of a utility corner shelf bracket, according to the present invention.
Figure 8b is an isometric schematic illustration of an illustrative, exemplary third embodiment of a utility corner shelf bracket, according to the present invention.
Figure 9a is a top schematic illustration of an illustrative, exemplary fourth embodiment of a utility corner shelf bracket, according to the present invention.
Figure 9b is a top schematic illustration of an illustrative, exemplary fourth embodiment of a utility corner shelf bracket, according to the present invention.
Figure 10a is a top schematic illustration of an illustrative, exemplary fifth embodiment of a utility corner shelf bracket, according to the present invention.
Figure 10b is an isometric schematic illustration of an illustrative, exemplary fifth embodiment, of a utility corner shelf bracket, according to the present invention.
Figure 11a is a top schematic illustration of an illustrative, exemplary sixth embodiment, first variant, of a utility corner shelf bracket, according to the present invention.
Figure 11b is an isometric schematic illustration of an illustrative, exemplary sixth embodiment, first variant, of a utility corner shelf bracket, according to the present invention.
Figure 11c is a top schematic illustration of an illustrative, exemplary sixth embodiment, first variant, of a utility corner shelf bracket, installed in a corner wall upon which is mounted a shelf, according to the present invention.
Figure 11d is an isometric schematic illustration of an illustrative, exemplary sixth embodiment, first variant, of a utility corner shelf bracket, which is attached to a load, according to the present invention.
Figure 11e is an isometric schematic illustration of an illustrative, exemplary sixth embodiment, second variant, of a utility corner shelf bracket having a protector connector, according to the present invention.
Figure 11f is a top schematic illustration of an illustrative, exemplary sixth embodiment, third variant, of a utility corner shelf bracket, having a protective wing in open state, according to the present invention.
Figure 11g is a top schematic illustration of an illustrative, exemplary sixth embodiment, third variant, of a utility corner shelf bracket, having a protective wing in closed state, according to the present invention.
Figure 11h is an isometric schematic illustration of an illustrative, exemplary sixth embodiment, third variant, of a utility corner shelf bracket, having a protective wing in open state, according to the present invention.
Figure 12a is a top schematic illustration of an illustrative, exemplary seventh embodiment of a utility corner shelf bracket, according to the present invention, in open mode.
Figure 12b is a top schematic illustration of an illustrative, exemplary seventh embodiment of a utility corner shelf bracket, according to the present invention, in bent mode.
Figure 12c is an isometric schematic illustration of an illustrative, exemplary seventh embodiment of a utility corner shelf bracket, according to the present invention, in folded mode.
Figure 13a is a front schematic illustration of an illustrative, exemplary eighth embodiment of a utility corner shelf bracket, according to the present invention in folded mode.
Figure 13b is a top schematic illustration of an illustrative, exemplary eighth embodiment of a utility corner shelf bracket, according to the present invention, in folded mode.
Figure 13c is a top schematic illustration of an illustrative, exemplary eighth embodiment of a utility corner shelf bracket, installed in a corner wall, according to the present invention.
Figure 13d is an isometric schematic illustration of an illustrative, exemplary eighth embodiment of a utility corner shelf bracket, at a stage prior to installation, according to the present invention.
Figure 14 is a top schematic illustration of a part of an embodiment of a utility corner shelf bracket, in a corner wall, in two modes, according to the present invention.
Figure 15 is a flow chart that schematically illustrates the stages of a method for installing a utility corner shelf bracket and a shelf at a corner wall, according to the present invention.
Figures 16a - 16c are top view schematic illustrations of stages of assembling niche shelf between two corner walls, according to the present invention.
Figure 16d is a top schematic illustration of a shelf, according to the present invention.
Figure 16e is a side view schematic illustration of a shelf, according to the present invention.
Figure 16f is an isometric bottom view schematic illustrations of a niche shelf, according to the present invention.
Figure 17a is a side view schematic illustration of a shelf, assembled at a wall ceiling corner, according to the present invention.
Figure 17b is an isometric view schematic illustration of a curtain carrying device, according to the present invention.
Figure 17c is a top view schematic illustration of a curtain carrying device, according to the present invention.
Figure 18a is a top view schematic illustration of a utility corner shelf bracket (third embodiment), and two baskets, according to the present invention.
Figure 18b is a front view schematic illustration of a utility corner shelf bracket (third embodiment), and two baskets, according to the present invention.
Figure 18c is an isometric view schematic illustration of a utility corner shelf bracket, (third embodiment), and two baskets, according to the present invention.

### DETAILED DESCRIPTION OF EMBODIMENTS

The present invention is of a utility corner shelf bracket and of a method for its installation with a shelf in a corner wall, and a method of removing them from the corner wall.

The principles and operation of a utility corner shelf bracket according to the present invention may be better understood with reference to the drawings and the accompanying description. Before explaining at least one embodiment of the invention in detail, it is to be understood that the invention is not limited in its application to the details of construction and the arrangement of the components set forth in the following description or illustrated in the drawings.

Unless otherwise defined, all technical and scientific terms used herein have the same meaning as commonly understood by one of ordinary skill in the art to which this invention belongs. The materials, dimensions, methods, and examples provided herein are illustrative only and are not intended to be limiting.

To remove any doubt, note that the manner in which the elements of the present invention are described in the illustrations can be highly detailed, however is not in any way limiting the present illustration, but rather is for the purpose of clarification and furthering understanding. The present invention can be implemented in embodiments that differ from the specification given with regard to the illustration.

The following list is a legend of the numbering of the application illustrations:
- 11: first bow
- 11a: first bow arc
- 11b: first bow wing
- 11c: first bow extender
- 11d: second bow extender
- 12: second bow
- 12a: first end of a second bow
- 12b: second end of a second bow
- 13a: third bow (of first embodiment)
- 13d: third bow (of fourth embodiment)
- 13da: third bow first end (of fourth embodiment)
- 13db: third bow second end (of fourth embodiment)
- 13e: third bow (of fifth embodiment)
- 13ea: third bow first end (of fifth embodiment)
- 13eb: third bow second end (of fifth embodiment)
- 14: hinge
- 15: socket
- 16: first socket plate
- 17: second socket plate
- 18: nail
- 19: support
- 20: pulling assembly
- 21 a: turnbuckle sleeve (of first embodiment)
- 21c: turnbuckle sleeve (of second and third and embodiments)
- 22a: first screwing rod
- 23a: second screwing rod (of first embodiment)
- 23c: second screwing rod (of second, third, and fourth embodiments)
- 24: first nut
- 25: second nut
- 26: tension bolt
- 27b: central rod (of second embodiment)
- 27c: central rod (of second, third, and fourth embodiments)
- 28: side rod
- 29: pivot
- 30: strengthening rib
- 31: T rod
- 32: support rod
- 33: cap
- 34: notch
- 35a: rear gripping area
- 35b: front gripping area
- 36: pressing handle
- 36a: pressing handle groove
- 37: hanging device
- 38: nail hole
- 39: folding groove
- 40: load
- 50: nail protector
- 50a: protector connector
- 50b: protector pin
- 50c: first bow wing hole
- 60: protective wing
- 60a: protective wing hole
- 60b: protective wing connecting end
- 61: protective wing support
- 61a: protective wing support first end
- 61b: protective wing support second end
- 100a: utility corner shelf bracket (first embodiment)
- 100b: utility corner shelf bracket (second embodiment)
- 100c: utility corner shelf bracket (third embodiment)
- 100d: utility corner shelf bracket (fourth embodiment)
- 100e: utility corner shelf bracket (fifth embodiment)
- 100f: utility corner shelf bracket (sixth embodiment)
- 100g: utility corner shelf bracket (seventh embodiment)
- 100h: utility corner shelf bracket (eighth embodiment)
- 101: corner wall
- 102: corner shelf
- 102a: longitudinal shelf support
- 102b: lateral shelf support
- 102c: shelf wall
- 102d: shelf hole
- 103: niche shelf
- 103a: longitudinal groove
- 103b: lateral groove
- 104: wall ceiling corner
- 105: curtain rod
- 106: basket
- 107: curtain carrying device

When the accompanying description of a specific illustration mentions an element not shown in that illustration or without numbering, its numbering is shown in parentheses, and can be found in one or more other illustrations.

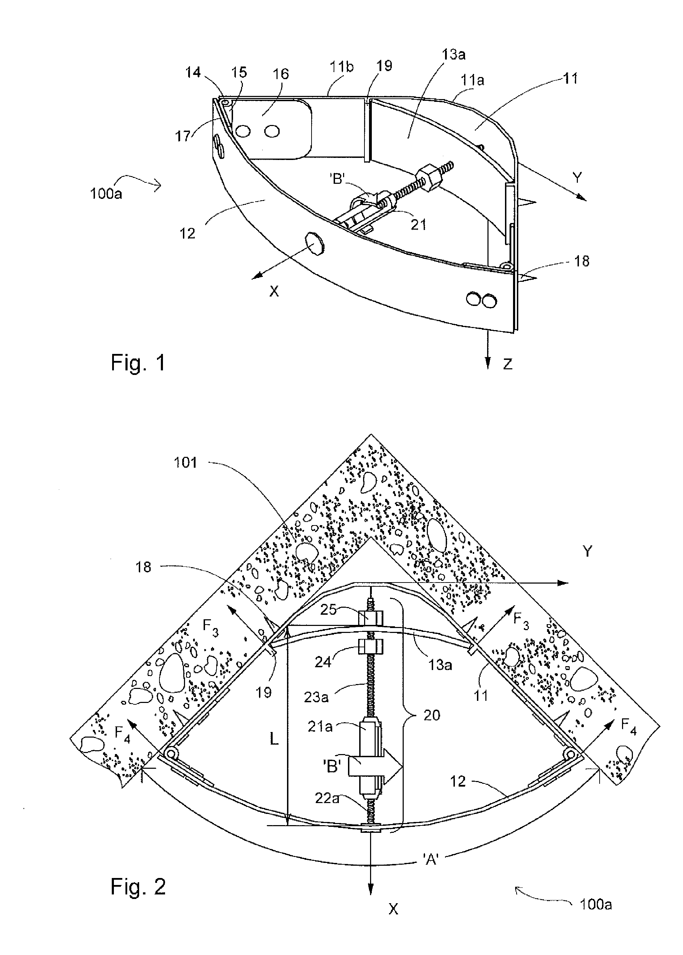

Referring now to the drawings, Figure 1 is an isometric schematic illustration of an illustrative, exemplary first embodiment of a utility corner shelf bracket 100a, (first embodiment), according to the present invention.

The utility corner shelf bracket **100a** (first embodiment) includes a first bow **11** and a second bow **12,** connected to each other at their ends so as to enable angular movement between their ends around two hinges **14,** one at each end, which form a closed shape from top view. Each hinge **14** is assembled within a socket **15,** which can be an integral part of a first socket plate 16, which is engaged with an additional socket, which can be an integral part of a second socket plate 17, while the two first socket plates **16** are disposed near both ends of the first bow 11, and the two second socket plates **17** are disposed near both ends of the second bow **12.**

In another possible embodiment, the sockets are integral parts of the first bow **11** and the second bow **12.** The first bow 11 and second bow **12** have arced shapes, while the center point of the first bow **11** is origin of a Cartesian axis system, whose axes X, Y, and Z, are in directions shown in the present illustration: the X axis is in the direction of the center point of the second bow 12, the Y axis is to the left, in view from the origin, on a plane parallel to that on which the first bow 11 and second bow 12 are placed so that after assembly to a corner wall (101), assuming that its walls are vertical, it is essentially a horizontal plane, and the Z axis in this state is vertically downwards. The central part of first bow **11** has a first bow arc **11a** and two first bow wings **11b;** each of which progresses to one of either end of first bow arc **11a,** and whose shape is planar after assembly to the corner wall (101), (if the wall is planar), as will be shown in Figure 2. The external side of each first bow wing lib has several nails **18,** which are designated for insertion into the corner wall **(101)** after assembly, in order to prevent movement between the utility corner shelf bracket 100a (first embodiment), and the corner wall **(101).** In order to facilitate the prevention of movement, the external surface of each first bow wing lib can have a high friction coefficient, which can be achieved either by selection of the material and the processing of the surface, or by adding an external layer of a suitable material, such as a layer of rubber.

The first bow **11** and second bow **12** can be composed of various materials, such as aluminum, and have a good ability for bending on the XY plane, suitable for manual forces applied on a pulling assembly **(20),** while they are durable to loads in the direction of the Z axis which may be applied to the corner shelf 102 while it is mounted upon the utility corner shelf bracket **100a** (first embodiment).

Inwards from the first bow **11** and second bow, is a third bow **13a,** (of the first embodiment), whose ends rest upon two supports **19,** each of which is disposed on the internal side of the first bow 11 for the purpose of transmitting forces from the first bow **11** and second bow **12,** which are generated at a certain point which will be described later on, by the pulling assembly **20.** Note that this form of force transmission from the third bow 13a, (of the first embodiment), to the first bow 11, is one viable option of several, and does not limit the present invention in any way.

The pulling assembly (20), one possible structure of which, and whose method of action, will be specified later on, includes a turnbuckle sleeve **21a,** with left and right hand internal threads on both ends, which can be rotated to the left or to the right, for purposes that will be specified later on, around axis X, with the rotation leftward in view from the origin, around axis X, marked in the present illustration with arrow 'B'.

Figure 2 is a top schematic illustration of an illustrative, exemplary first embodiment of a utility corner shelf bracket **100a** (first embodiment), installed on a corner wall **101,** according to the present invention.

In this state, the angle 'A' formed between both of the first bow wings lib, equals the angle formed between both walls comprising the corner wall **101,** and the nails **18** are inserted in the walls. In this state, a corner shelf **102** can be placed upon the utility corner shelf bracket **100a** (first embodiment). The angle 'A' is, in most cases, of **90** degrees, however the utility corner shelf bracket **100a** (first embodiment), can also be installed in other values of this angle.

The pulling assembly **20,** which can apply pulling force, is disposed along the X axis, between the second bow **12,** and the third bow **13a** (of the first embodiment), which applies forces **F₃** on the first bow wings lib. This pulling also causes the second bow **12** to apply forces **F₄** on the first bow wings lib. These force components fasten the first bow wings lib towards the two walls of the corner wall **101.**

The pulling assembly **20,** shown in the illustrations of the present patent application, includes two rods, a first screwing rod **22a,** with external threads in a first direction, and a second screwing rod **23a,** with external threads in a second direction.

The two rods are engaged with turnbuckle sleeve 21a, namely are screwed into turnbuckle sleeve 21a, which has left and right hand internal threads at both of its ends and ability to rotate left and right around the X axis, as shown by arrow 'B'.

The turnbuckle sleeve **21a** can be shaped as a cylinder with a closed wall or partial wall, as shown in the illustrations of the present application.

The first screwing rod **22a** is connected to a second bow **12,** and the second screwing rod **23a** is connected to a third bow **13a** (of the first embodiment), through a hole in its center, and its location, according to one embodiment, can be adjusted by means of a first nut **24,** and a second nut **25.** In this manner, the operation of the pulling assembly **20,** which is done by means of rotation of the turnbuckle sleeve **21a,** in one direction, changing its length **L,** results in the first rod **22a** and the second screwing rod 23a moving towards one another, creating the pulling force described above, while rotation in the other direction causes the rods to move away from one another, and the pulling force is replaced by a pushing force which reverses the directions of forces **F₃** and **F₄,** thus decreasing the angle 'A' between the two first bow wings lib and therefore causing their moving away and the removal of the nails **18** from the walls.

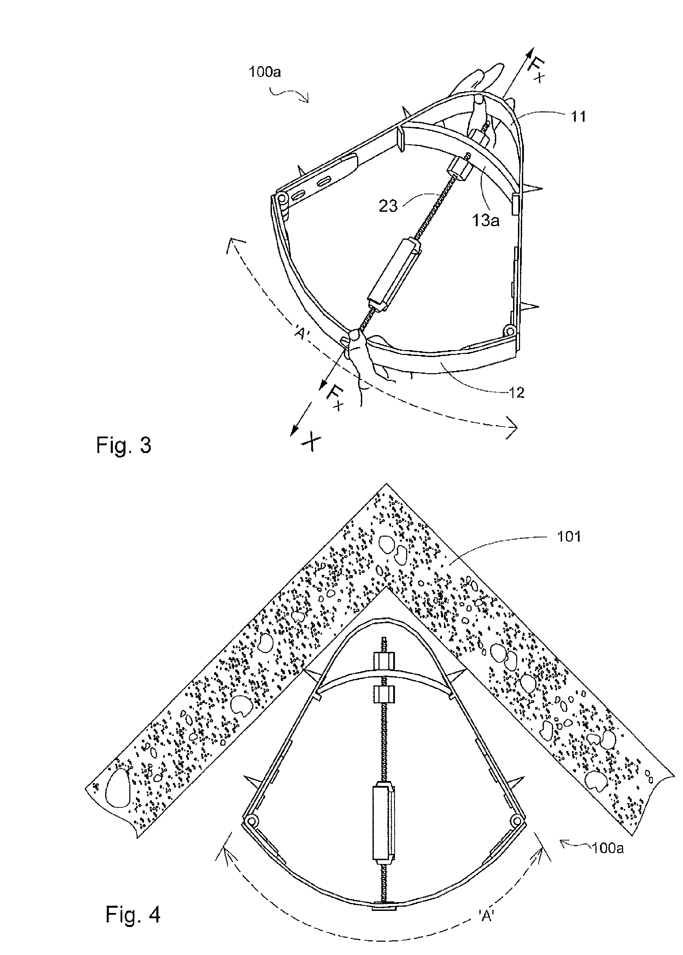

Figure 3 is an isometric schematic illustration of an illustrative, exemplary first embodiment of a utility corner shelf bracket **100a** (first embodiment), at a stage prior to installation, according to the present invention.

At this stage, the installing person, who can be without any special expertise, uses both hands to tension the utility corner shelf bracket **100a** (first embodiment), along the X axis, ensuring that the angle 'A' is small enough to bring close to the corner wall 101.

Figure 4 is a top schematic illustration of an illustrative, exemplary first embodiment of a utility corner shelf bracket **100a** (first embodiment), installed at a corner wall **101,** at a stage prior to installation, according to the present invention.

Because angle 'A' is sufficiently small, the utility corner shelf bracket **100a** (first embodiment), can be brought close to the corner wall **101,** as shown in the present illustration, for the purpose of installation,

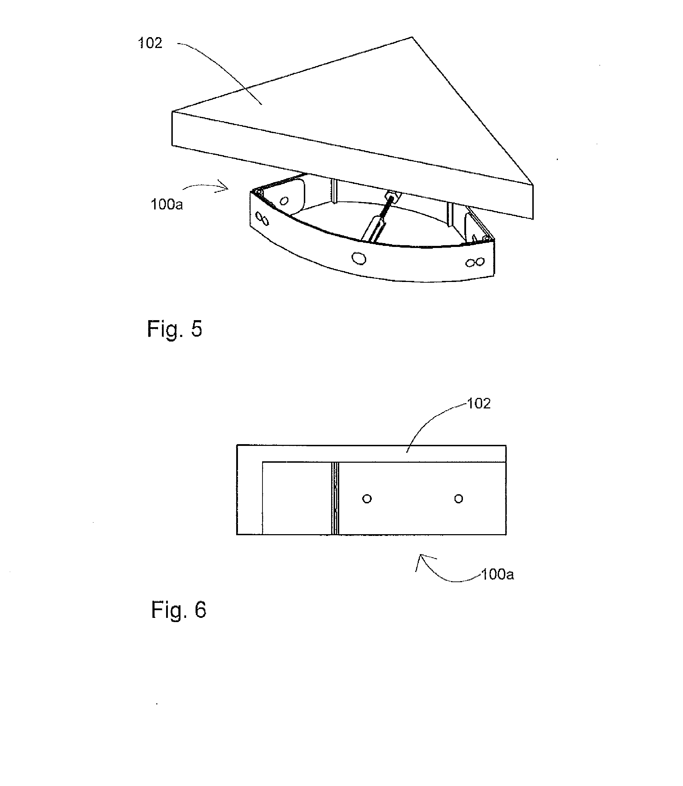

Figure 5 is an isometric schematic illustration of an illustrative, exemplary first embodiment of a utility corner shelf bracket **100a** (first embodiment), and a corner shelf **102,** at a stage prior to placing the shelf **102** on the utility corner shelf bracket 100, (first embodiment), according to the present invention.

Figure 6 is a right side schematic illustration of an illustrative, exemplary first embodiment of a utility corner shelf bracket **100a** (first embodiment), and a corner shelf **102,** at a stage following placing the corner shelf **102** upon the utility corner shelf, according to the present invention.

The invention according to the present patent application is not limited to the installation of the utility corner shelf bracket **100a** (first embodiment), in corners of vertical walls, and it can also be installed, for example, in a corner formed between a wall and a ceiling.

A method for installing a utility corner shelf bracket (100a) (first embodiment), and a corner shelf **(102)** at a corner wall includes the stages of:
- providing a utility corner shelf bracket **(100a)** (first embodiment)), and a shelf (102);
- tensioning the utility corner shelf bracket **(100a)** (first embodiment);
- turning the turnbuckle sleeve (21a), until the nails **(18)** are sufficiently inserted into the walls; and
- placing the corner shelf **(102)** upon the utility corner shelf bracket.

The method for removing a utility corner shelf bracket (100a) (first embodiment), and a corner shelf (102) from a corner wall includes the stages of:
- removing the corner shelf **(102)** from the utility corner shelf bracket **(100a)** (first embodiment);
- turning the turnbuckle sleeve, until reaching extraction of the nails **(18)** from the walls; and
- removing the utility corner shelf bracket **(100a)** (first embodiment) from the corner wall.

The following illustrations and the accompanying description specifies additional embodiments.

Many of the structural features and qualities typical of the first embodiment also apply to these additional embodiments. Various combinations of structural elements and features mentioned in the present patent application can serve for additional embodiments of the utility corner shelf bracket according to the present invention.

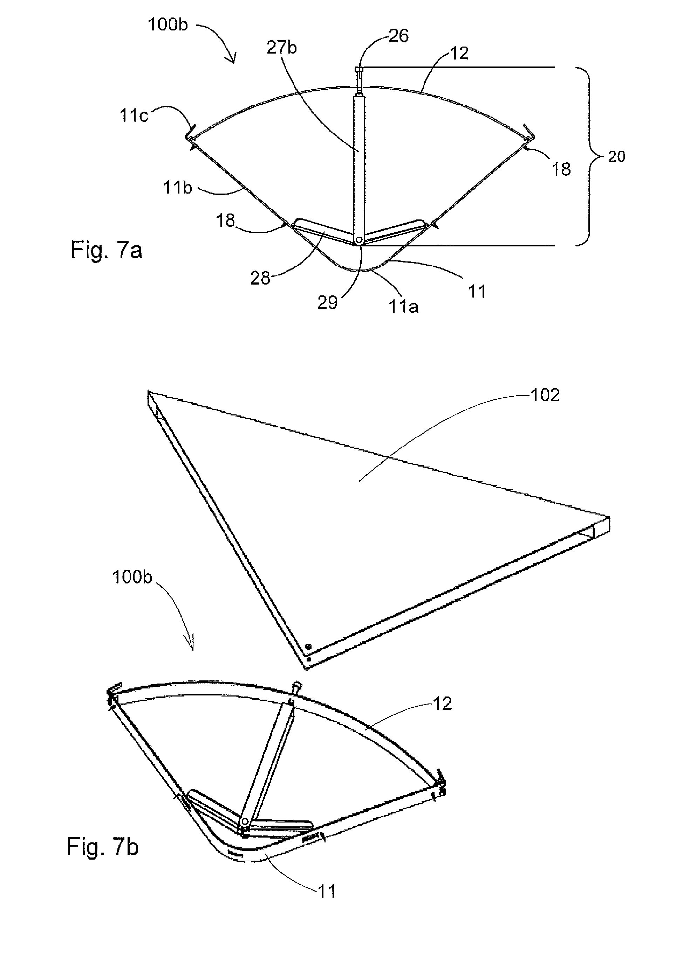

Figure 7a is a top schematic illustration of an illustrative, exemplary second embodiment of a utility corner shelf bracket **100b,** according to the present invention.

The pulling assembly **20** of the present illustration includes a tension bolt 26, and a central rod **27b** (of the second embodiment), which is connected, by means of a pivot **29,** to two side rods **28** in lieu of the third bow **(13a).** Each of both ends of the first bow **11** can have the optional addition of a first bow extender lie whose top view shape can be straight, round, etc., and it is designated to increase the area of contact with the corner shelf **(102).**

The first bow 11 has a first bow arc **11a** and two first bow wings lib, each of which progresses to one of either end of first bow arc 11a, and whose shape is planar after assembly to a corner wall **(101)** (if the wall is planar).

Figure 7b is an isometric schematic illustration of an illustrative, exemplary second embodiment of a utility corner shelf bracket **100b,** and a corner shelf **102,** according to the present invention. Corner shelf **102,** shown in the present illustration, is one of many possible configurations. In this case, its installation is not by means of placing from the top, but rather horizontal insertion upon a utility corner shelf bracket, which is suitable for various embodiments of the utility corner shelf bracket.

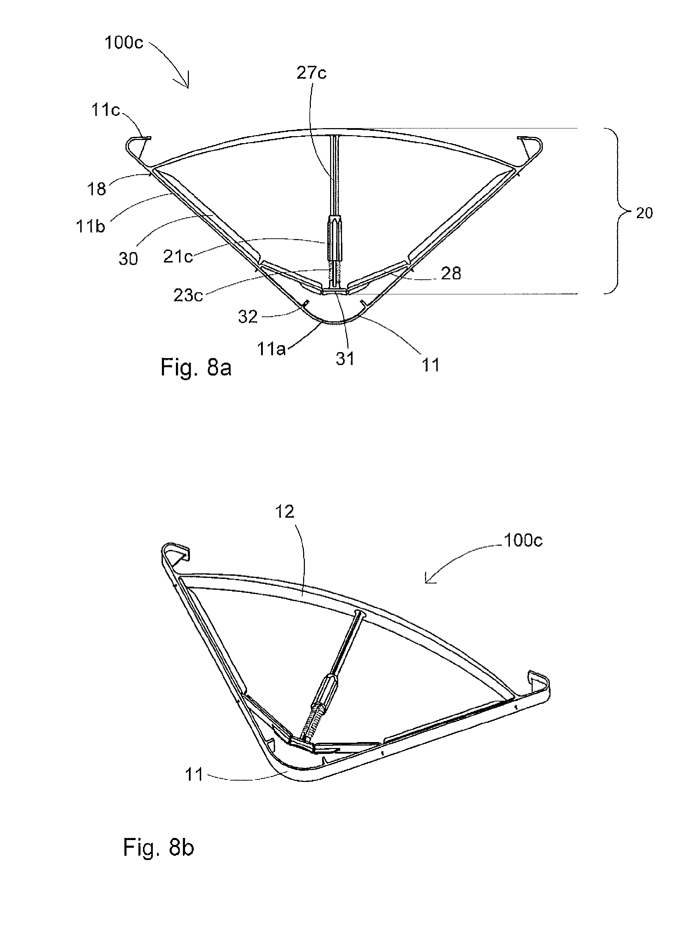

Figure 8a is a top schematic illustration of an illustrative, exemplary third embodiment of a utility corner shelf bracket **100c,** according to the present invention.

The pulling assembly **20** of the present illustration includes a central rod 27c (of second, third, and fourth embodiments), a turnbuckle sleeve 21c (of second, third, and fourth embodiments), and a second screwing rod 23c (of second, third, and fourth embodiments), whose end is connected to a T rod 31, both of whose ends have shafts which are connected to two side rods **28,** as shown in the illustration.

The central part of first bow **11** has a first bow arc **11a** and two first bow wings 11b, each of which progresses to one of either end of first bow arc **11a,** and whose shape is planar after assembly to a corner wall **(101)** (if the wall is planar).

The internal wall of the first bow **11** has at least one support rod **32,** which prevents overextension, and thus protects the user's fingers. Each first bow wing lib on the internal wall is connected to a strengthening rib 30, which provides additional resistance to bending and facilitates mounting up to a wall.

The first bow extenders lie shown in the present illustration are of another possible top view shape, and as noted, are designated to increase the area of contact with the corner shelf **(102).**

Figure 8b is an isometric schematic illustration of an illustrative, exemplary second embodiment of a utility corner shelf bracket **100c,** according to the present invention.

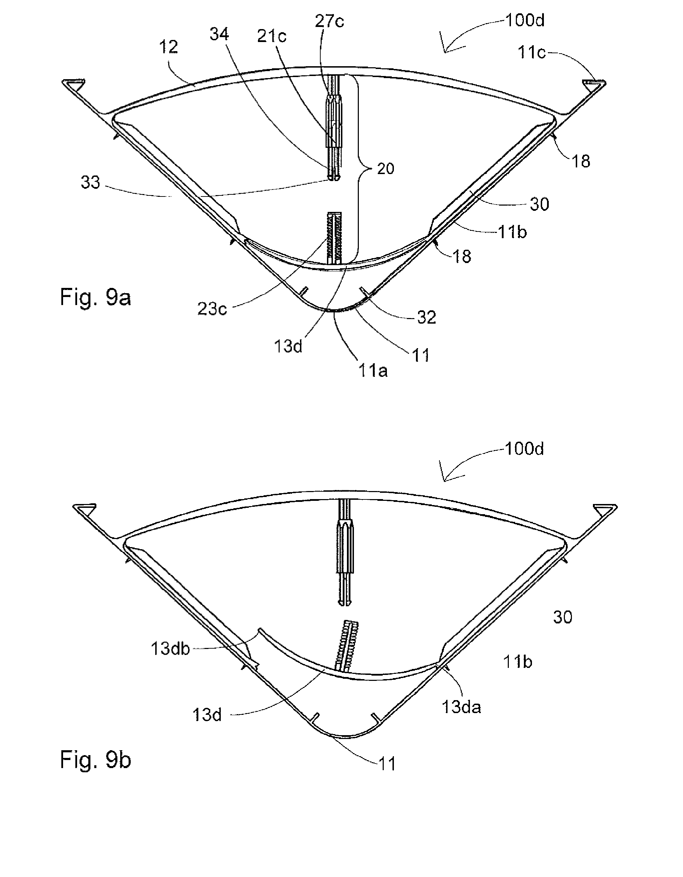

Figure 9a is a top schematic illustration of an illustrative, exemplary fourth embodiment of a utility corner shelf bracket 100d, according to the present invention.

The fourth embodiment of a utility corner shelf bracket **100d** has much in common with the third embodiment of a utility corner shelf bracket **(100c).** The main difference is that the fourth embodiment of a utility corner shelf bracket **100d** has a third bow **13d** (of the fourth embodiment) in lieu of the T rod 31 and support rods **32.** The turnbuckle sleeve **21c** (of the of second, third, and fourth embodiments), has internal screw threading only on one end. Its other end has free rotational movement around the central rod **27c** (of the of second, third, and fourth embodiments). The end of the central rod **27c** has a cap **33** which prevents the turnbuckle sleeve **21c** from disconnecting from the central rod **27c.** The central rod **27c** and the cap **33** each have a notch **34** which enables mounting the turnbuckle sleeve **21c** upon the central rod **27c.**

The first bow **11** has a first bow arc **11a** and two first bow wings lib, each of which progresses to one of either end of first bow arc **11a,** and whose shape is planar after assembly to a corner wall **(101)** (if the wall is planar).

The fourth embodiment of a utility corner shelf bracket 100d has a pulling assembly 20.

Figure 9b is a top schematic illustration of an illustrative, exemplary fourth embodiment of a utility corner shelf bracket **100d,** according to the present invention. The present illustration shows that the third bow **13d** (of the fourth embodiment) has two ends, the third bow first end **13da** (of the fourth embodiment), which has a fixed connection to first bow wing lib, while the third bow second end **13db** (of the fourth embodiment) can be free, as shown in the present illustration, to facilitate initial bending of the first bow **11.**

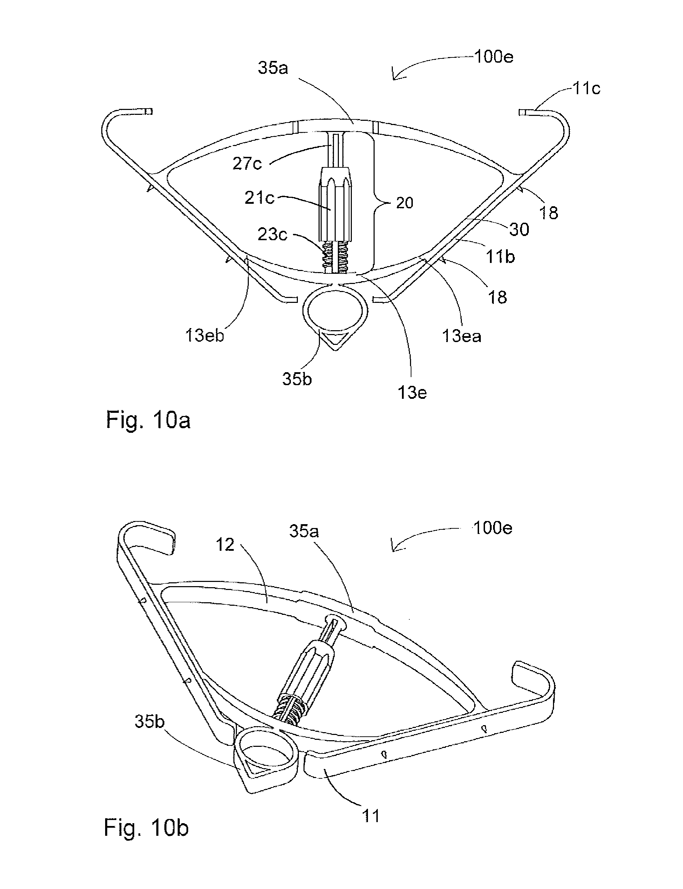

Figure 10a is a top schematic illustration of an illustrative, exemplary fifth embodiment of a utility corner shelf bracket **100e,** according to the present invention.

The fifth embodiment of a utility corner shelf bracket **100e** has a lot in common with the fourth embodiment of a utility corner shelf bracket **100d.** The main difference is that the fifth embodiment of a utility corner shelf bracket **100e** has no complete first bow **11** and furthermore, both the third bow first end **13ea** (of the fifth embodiment) and the third bow second end **13eb** (of the fifth embodiment) of the third bow **13e** (of the fifth embodiment), have a fixed connection to either first bow wing lib or strengthening rib **30.** Furthermore, in order to facilitate extension, the fifth embodiment of the utility corner shelf bracket **100e** includes two gripping areas, rear gripping area **35a** and front gripping area 35b, which in the case of the present illustration are suitable for insertion of a finger.

The fifth embodiment of a utility corner shelf bracket **100e** has a pulling assembly 20.

Figure 10b is an isometric schematic illustration of an illustrative, exemplary fifth embodiment of a utility corner shelf bracket **100e,** according to the present invention.

The present illustration shows that the rear gripping area **35a** has a large width dimension relative to the width dimension of the second bow 12.

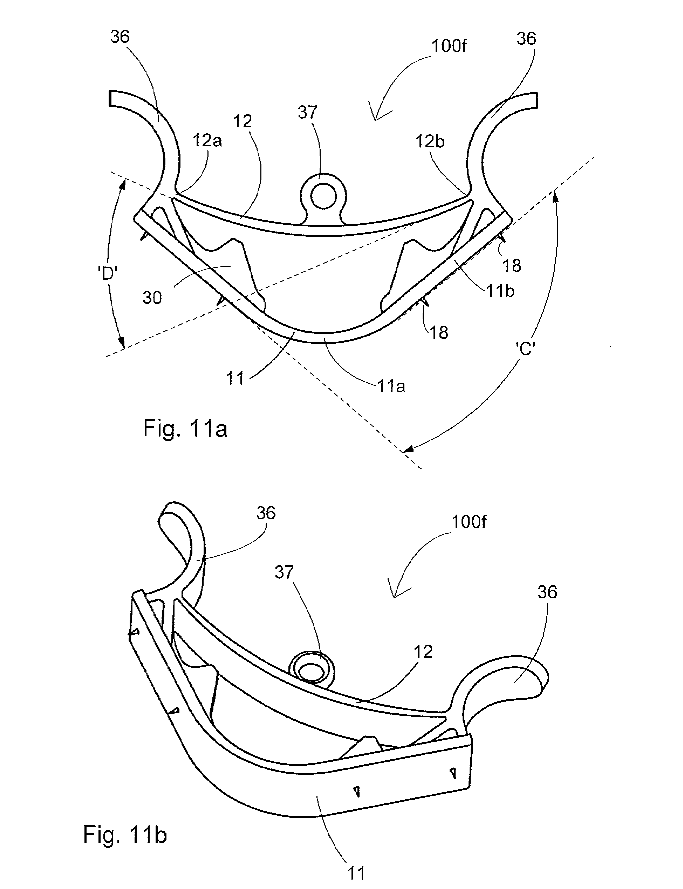

Figure 11a is a top schematic illustration of an illustrative, exemplary sixth embodiment, first variant, of a utility corner shelf bracket **100f,** according to the present invention.

The sixth embodiment of a utility corner shelf bracket **100f** does not have any pulling assembly and the forces attaching it to the walls come from the elasticity of the first bow 11, having a first bow arc **11a**, and the second bow **12,** which are, for all practical purposes, springs.

Compression prior to mounting in a wall corner is done by means of pressing two pressing handles **36.** When the dimensions of the sixth embodiment of a utility corner shelf bracket **100f** are sufficiently small, the compression can be done with one hand. Likewise, the sixth embodiment of a utility corner shelf bracket **100f** can also include a hanging device **37,** to which one can, for example, tie a string with a balloon on its end.

The second bow 12 has two ends, a first end of a second bow **12a,** and a second end of a second bow **12b,** while each end is disposed directly to the end of each of the two first bow wings lib or to one of the two pressing handles **36,** while both options are acceptable and efficient.

The state shown in the present illustration is a free state, namely, there is no influence of any external forces on the utility corner shelf bracket **100f** (sixth embodiment), and its shape is determined by the equilibrium of the internal elastic forces.

The first bow **11,** which is a spring, as noted, is bent in the free state bow arc bending angle **'C',** the value of which is smaller than 90 degrees, while the second bow **12,** which is also a spring, as noted, is bent at second bow bending angle **'D'.** It has been determined that for the purpose of effective functioning of the utility corner shelf bracket 100f (sixth embodiment), the angle 'D' must be larger than a value suitable for a given model of utility corner shelf bracket **100f** according to its structure and its composing materials. A typical value is bending of 40 degrees.

The present illustration shows that strengthening ribs **30** can have a suitable shape and dimensions to serve as buffers preventing excessive compression of the sixth embodiment of a utility corner shelf bracket **100f.** The sixth embodiment of a utility corner shelf bracket **100f** can be composed of a single part and of a single material, without any moving parts, namely without any hinges or the like, and it can be manufactured in an injection process, without any connection means such as adhesives, welding, screws, etc. between its various parts.

Good materials for the production of a sixth embodiment of a utility corner shelf bracket **100f can** be selected from the group of polymers.

Figure 11b is an isometric schematic illustration of an illustrative, exemplary sixth embodiment, first variant, of a utility corner shelf bracket **100f,** according to the present invention.

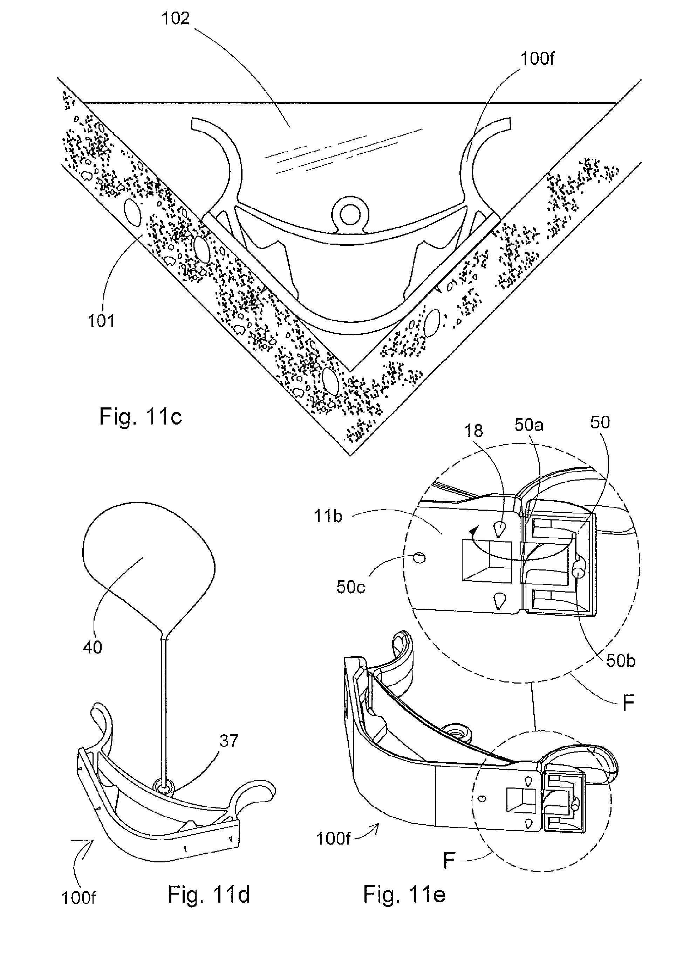

Figure 11c is a top schematic illustration of an illustrative, exemplary sixth embodiment, first variant, of a utility corner shelf bracket **100f,** installed in a corner wall **101** upon which is mounted a corner shelf **102,** according to the present invention.

Corner shelf **102** can be transparent, as shown in the present illustration, or opaque. The corner wall **101** shown in the present illustration has an angle of practically ninety degrees, and the corner shelf bracket **100f** was mounted into the corner after it was sufficiently compressed from its released mode, and after being placed next to the corner wall **101,** opened and latched into place by means of its elasticity.

Figure 11d is an isometric schematic illustration of an illustrative, exemplary sixth embodiment, first variant, of a utility corner shelf bracket **100f** which is attached to a load **40,** according to the present invention.

Load **40,** in the case of the present illustration, is a string and an attached balloon which is filled with a gas lighter than air so that it floats upwards. Load **40** can also be heavier than air, and can include various different means, such as string, chains, hooks, or connectors for connection to the utility corner shelf bracket **100f.** The connection can be to hanging device **37** as well as to other locations of the utility corner shelf bracket **100f.**

Figure 11e is an isometric schematic illustration of an illustrative, exemplary sixth embodiment, second variant, of a utility corner shelf bracket **100f** having a nail protector **50,** according to the present invention.

In order to reduce the risk of injury from a nail 18, the utility corner shelf bracket **100f** can be equipped with nail protectors **50,** one of which is shown in the present illustration.

The illustration marks detail **F** in a circle, which is magnified in the circle on the upper side of the illustration, which also shows the nail protector **50.**

Nail protector **50** is connected to first bow wing **11b** by means of a protector connector **50a,** which is thin relative to the thickness of the first bow wing **11b,** enabling bending and shifting the protector connector **50a** from an open state, as shown in the present illustration, to a closed state (by rotational movement as indicated by an arrow in the illustration), in which the protector connector **50a** covers nails **18.**

The protector connector **50a** can also be equipped with a protector pin **50b,** which in a closed state will be inserted into a first bow wing hole 50c, in which it will be held by forces of friction, until force is applied to release it.

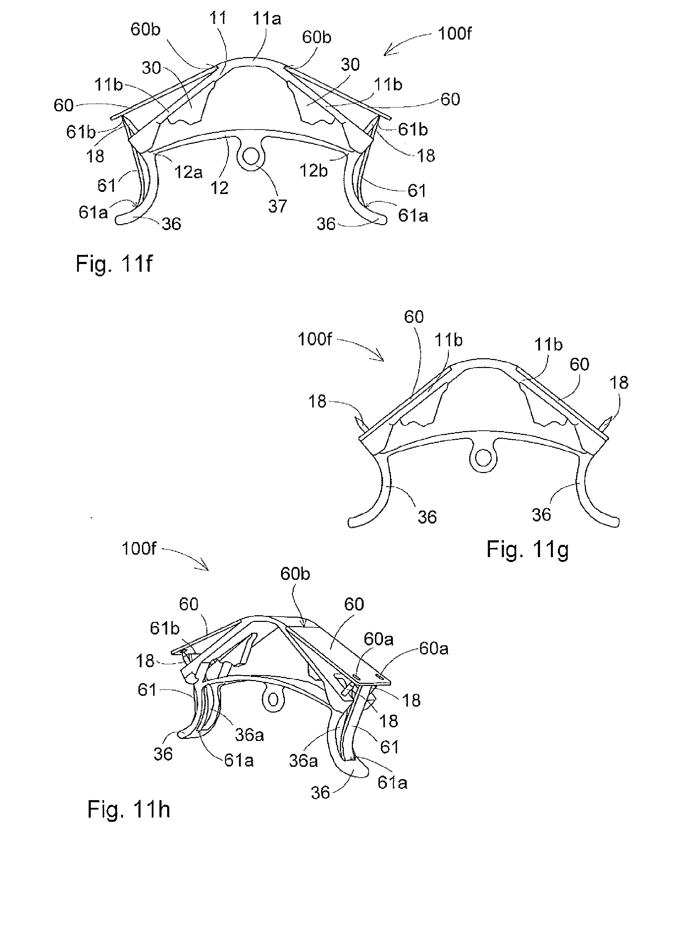

Figure 11f is a top schematic illustration of an illustrative, exemplary sixth embodiment, third variant, of a utility corner shelf bracket **100f,** having a protective wing 60 in open state, according to the present invention.

The sixth embodiment, third variant, of the utility corner shelf bracket **100f,** including all of the components described with regard to figure 11a, namely to the sixth embodiment, first variant, of the utility corner shelf bracket **100f,** namely it includes the first bow **11,** having a first bow arc **11,** and tow first bow wings **11b,** the second bow **12** having two ends, a first end of a second bow **12a,** and a second end of a second bow **12b,** the two pressing handles 36, the hanging device **37,** and the nails **18.**

Furthermore, the sixth embodiment, third variant, of the utility corner shelf bracket **100f** includes two protective wings **60,** and two protective wing supports **61**.

The protective wings **60** are meant to shield from damage that can be caused to humans, animals, and inanimate objects as a result of contact with nails **18.**

Each protective wing **60** is connected to the first bow **11** at the protective wing connecting end **60b**. The connection can be by various means, such as by means of a shaft, an elastic connection, or any other suitable connection, while it is preferable for the connection to be such that will generate a moment driving the protective wing **60** toward a first bow wing **11b**. In the open state shown in the present illustration, each protective wing **60** is supported toward a protective wing support 61 and protects from contract with nails **18.**

Each protective wing support 61 is connected at a protective wing support first end 61a to one of the two pressing handles **36.**

Figure 11 g is a top schematic illustration of an illustrative, exemplary sixth embodiment, third variant, of a utility corner shelf bracket **100f,** having a protective wings 60 in closed state, according to the present invention.

In this state, each protective wing support **61,** which is made of elastic material, is within a pressing handle groove 36a, and it is impossible to see neither the protective wing supports **61** nor the pressing handle grooves **36a.**

Each one of the protective wings **60** is now pressed to one of the first bow wings **11b** and the nails **18** are exposed, a state which is suitable for attachment to the wall.

Figure 11h is an isometric schematic illustration of an illustrative, exemplary sixth embodiment, third variant, of a utility corner shelf bracket 100f, having a protective wings **60** in open state, according to the present invention.

The present illustration also clearly shows both pressing handle grooves **36a,** one in each pressing handle **36,** as well as the manner in which a protective wing supports **61** protective wing support first end **61a** to a pressing handle **36,** and supports a protective wing **60.**

Likewise the present illustration shows protective wing holes **60a** enabling the passage of nails **18** through a protective wing **60**.

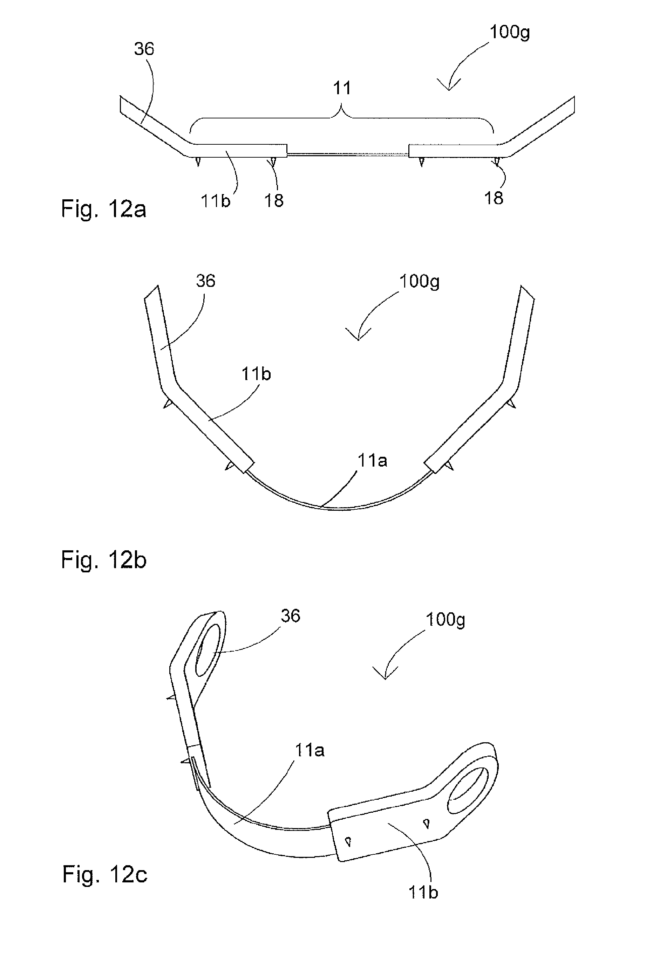

Figure 12a is a top schematic illustration of an illustrative, exemplary seventh embodiment of a utility corner shelf bracket **100g,** according to the present invention, in open mode.

The main feature of the seventh embodiment of a utility corner shelf bracket **100g** is its small amount of components, and particularly the absence of the second bow (12) and pulling assembly **(20).** When it is not mounted in a wall corners it can be in a mode in which the first bow **11** is open on one straight plane.

The forces attaching the seventh embodiment of a utility corner shelf bracket **100g** to the walls come from the elasticity of the first bow **11.** The first bow 11 can be made of a flexible metal or plastic material, and the entire seventh embodiment of a utility corner shelf bracket **100g** can be manufactured as a single integrated unit.

Figure **12b** is a top schematic illustration of an illustrative, exemplary seventh embodiment of a utility corner shelf bracket **100g,** according to the present invention, in bent mode.

Figure 12c is an isometric schematic illustration of an illustrative, exemplary seventh embodiment of a utility corner shelf bracket **100g,** according to the present invention, in bent mode.

The pressing handles **36** can be designed to be suitable for convenient use with fingers.

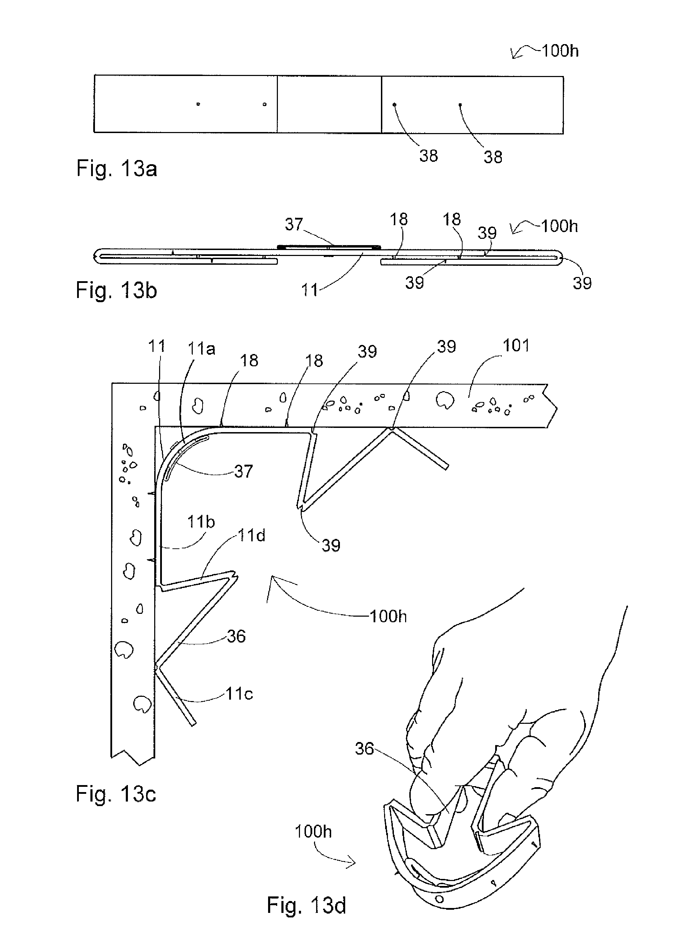

Figure 13a is a front schematic illustration of an illustrative, exemplary eighth embodiment of a utility corner shelf bracket **100h,** according to the present invention in folded mode.

The eighth embodiment of the utility corner shelf bracket **100h** can also be made of a flexible plastic material and, when not in use, can be folded into two fiat layers, with the nails (18) concealed in nail holes **38,** to prevent any risk of injury.

Figure 13b is a top schematic illustration of an illustrative, exemplary eighth embodiment of a utility corner shelf bracket **100h,** according to the present invention, in folded mode.

The parts of the eighth embodiment of the utility corner shelf bracket **100h** can also include folding grooves **39,** to facilitate folding.

The illustration also shows hanging device **37,** which can also be made of a flexible plastic material.

Figure 13c is a top schematic illustration of an illustrative, exemplary eighth embodiment of a utility corner shelf bracket **100h,** installed in a corner wall, according to the present invention. Other than hanging device 37 and the nails **18,** all components of the eighth embodiment of the utility corner shelf bracket **100h** are one single piece of material with holes and folding grooves. The first bow **11** has a first bow arc **11a** and two first bow wings lib, each of which progresses to one of either end of first bow arc **11a**.

Figure 13d is an isometric schematic illustration of an illustrative, exemplary eighth embodiment of a utility corner shelf bracket **100h,** at a stage prior to installation, according to the present invention. A second bow extender **11d** is disposed on the end of each first bow wing, a pressing handle 36 is disposed on the end of each second bow extender **11d**, and as an additional option, a first bow extender **11c** is disposed on the end of each pressing handle **36.**

The user presses both pressing handles **36,** and so prepares the eighth embodiment of the utility corner shelf bracket **100h** for mounting on a wall corner.

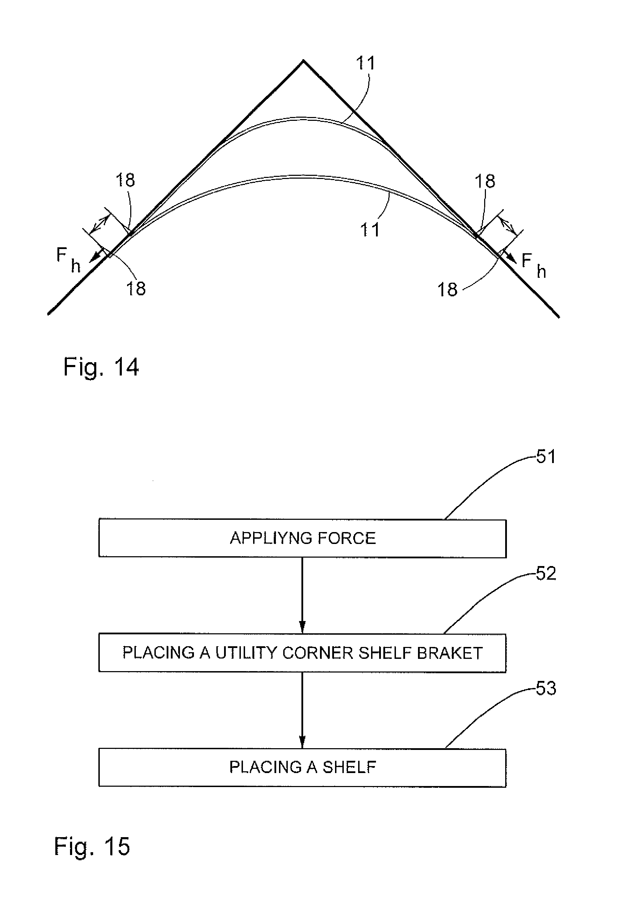

Figure 14 is a top schematic illustration of a part of an embodiment of a utility corner shelf bracket, in a corner wall, in two modes, according to the present invention.

The present illustration demonstrates how the elasticity of the first bow **11** generates horizontal forces F**ₕ** by means of nails **18.**

As noted, the illustration shows two modes, in the first the arc radius of the first bow 11 is smaller than that of the second mode. When preparing a utility corner shelf bracket for mounting in a wall corner, an arc with a smaller radius is formed, and afterward the elasticity of the first bow **11** causes this radius to grow. When the nails **18** are inserted into the walls, the radius growth is stopped. As shown in the illustration, the distance of nail **18** from the wall corner depends on the radius. The growth of the radius is stopped by means of the force applied by the wall on the nails **18,** which equals the force on the horizontal plane, in the case shown in the present illustration, applied by nail **18** on the wall, marked here as **Fₕ.**

Figure 15 is a flow chart that schematically illustrates the stages of a method for installing a utility corner shelf bracket and a shelf at a corner wall, according to the present invention.

The method includes the stages:
- applying force on both of first bow wings of a utility corner shelf bracket, which reduces the angle between both of said first bow wings;
- placing said utility corner shelf bracket at a desired location, near said corner wall; and
- placing a shelf upon said utility corner shelf bracket. These stages are marked in the present illustration as **51, 52,** and **53** respectively. Instead of or in addition to stage 53, a load can be hung on the utility corner shelf bracket.

The applying force on both of the first bow wings is performed for each embodiment of the present invention according to its structure, namely by pressure of the fingers on both of the first bow wings or any other structural part of the utility corner shelf bracket, or by transmitting force through the rotation of the turnbuckle sleeve or a screw.

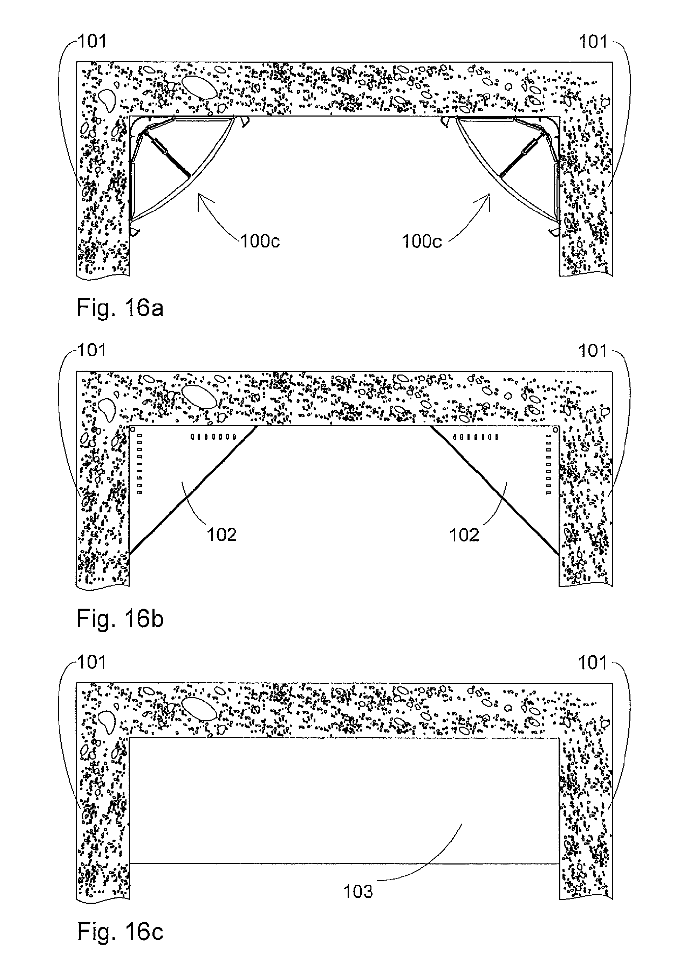

Figures 16a - 16c are top view schematic illustrations of stages of assembling niche shelf **103** between two corner walls **101,** according to the present invention.

Figure 16a shows two utility corner shelf brackets **100c** (third embodiment), each one is mounted in a corner wall **101,** according to the present invention.

The present invention is not limited in any way to use of a utility corner shelf bracket **100c** (third embodiment), for assembly of a niche shelf **103** between two corner walls **101,** according to the present invention..

Figure 16b shows two corner shelves **102,** each of which in the present case has a triangular shape, though other shapes are also possible; after each of both has been mounted on a different utility corner shelf bracket (100c) (third embodiment), according to the present invention.

Figure 16c shows a niche shelf **103** after being placed upon both corner shelves **102,** according to the present invention.

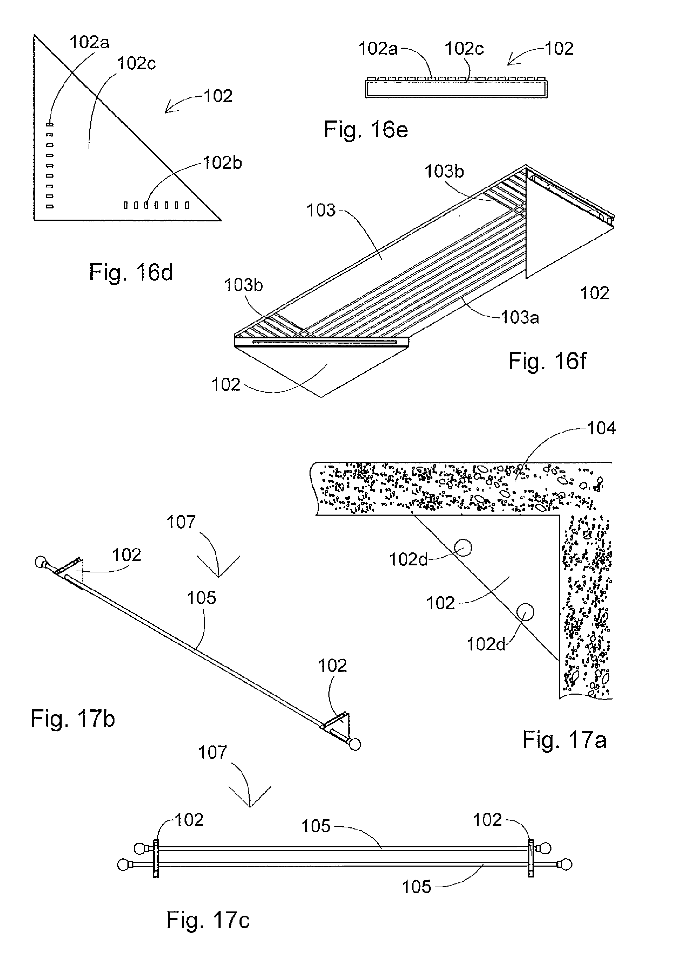

Figure 16d is a top schematic illustration of a corner shelf **102,** according to the present invention.

Shelf supports **102a** can be disposed upon a shelf **wall 102c** to support the niche shelf **103.**

Figure 16e is a side view schematic illustration of a corner **shelf 102,** according to the present invention.

The present illustration also shows shelf supports **102a** disposed upon shelf wall **102c**.

Figure 16f is an isometric bottom view schematic illustrations of a niche shelf **103,** according to the present invention.

On one side of the niche shelf **103,** which, after mounting the shelf will be the bottom side, longitudinal grooves **103a** and lateral grooves **103b** are etched.

The longitudinal grooves **103a** and lateral grooves **103b** enable breaking the niche shelf **103** to fit to any given desired dimensions, and furthermore can be engaged with the longitudinal shelf supports **102a** and the lateral shelf supports **102b,** to prevent niche shelf **103** from sliding out of place.

Figure 17a is a side view schematic illustration of a corner shelf **102,** assembled at a wall ceiling corner **104,** according to the present invention.

Vertically positioned corner shelves **102** have shelf holes **102d** designated to receive rods, such as a curtain rod **105.**

Each corner shelf **102** is mounted on one utility corner shelf bracket, for example, a utility corner shelf bracket **(100c)** (third embodiment).

Figure 17b is an isometric view schematic illustration of a curtain carrying device **107,** according to the present invention.

The curtain carrying device **107** includes two corner shelves 102 and a curtain rod 105, which can be assembled with a curtain. This enables easily mounting a curtain near a wall and a ceiling.

Figure 17c is a top view schematic illustration of a curtain carrying device **107,** according to the present invention.

The configuration shown in the present invention has two curtain rods **105.** This device enables hanging two curtains, and likewise more than two curtains can be hung in a similar manner, by use of more than two curtain rods **105.**

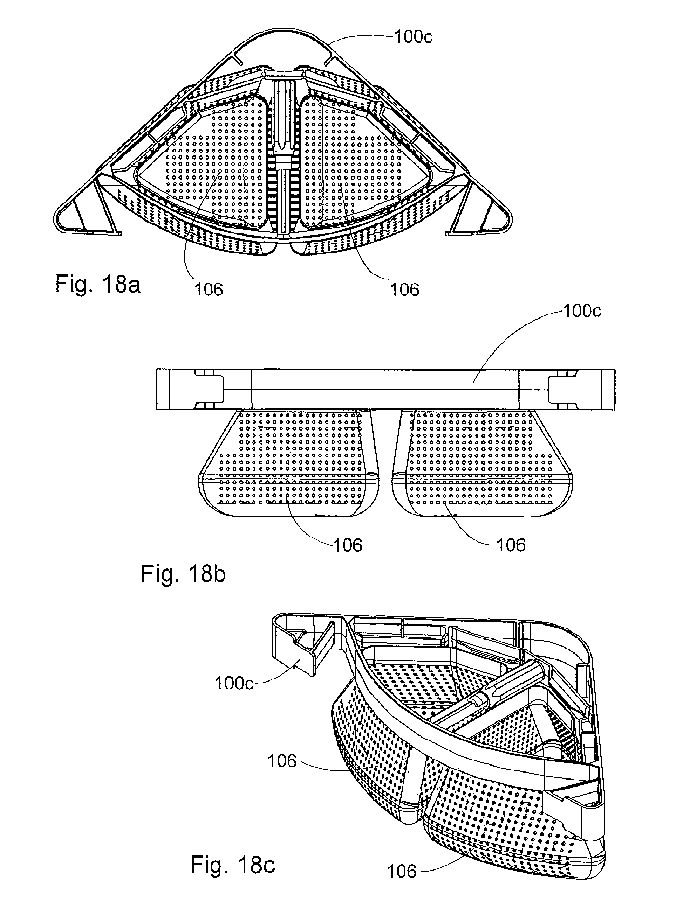

Figure 18a is a top view schematic illustration of a utility corner shelf bracket **100c,** (third embodiment), and two baskets **106,** according to the present invention.

Basket **106** can be connected to a utility corner shelf bracket **100c** (third embodiment), and to another utility corner shelf bracket according to the present invention, by various methods, such as use of screws, hooks, etc.

Baskets **106** can be used to carry various practical items such as fruits, vegetables, etc.

Figure 18b is a front view schematic illustration of a utility corner shelf bracket 100c (third embodiment), and two baskets **106,** according to the present invention.

Figure 18c is an isometric view schematic illustration of a utility corner shelf bracket **100c** (third embodiment), and two baskets **106,** according to the present invention.

While the invention has been described with respect to a limited number of embodiments, it will be appreciated that many variations, modifications and other applications of the invention may be made.

## Claims

1. A utility corner shelf bracket (100) **characterized in that** the utility corner shelf bracket (100) comprises:
(a) a first bow (11), said first bow including:
(i) two first bow wings (11b); and
(ii) a first bow arc (11a), wherein each one of said first bow wings (11b) is operatively connected to said first bow arc (11); and
(b) at least one nail (18) is disposed on each one of said first bow wings (11b).

2. The utility corner shelf bracket (100) of claim I, further comprising:
(c) a second bow (12) operatively connected to said first bow (11); and
(d) a pulling assembly (20), having a length (L), operatively connected to said second bow (12), wherein an operation of said pulling assembly (20) creates a pulling force on said second bow (12), and wherein said second bow (12) applies force to said two first bow wings (11b).

3. The utility corner shelf bracket (100) of claim 2, wherein said pulling assembly (20) includes:
(i) a turnbuckle sleeve (21 c);
(ii) a central rod (27c), having two ends, wherein one of said ends of said central rod (27) is disposed on said second bow (12), and wherein one of said ends of said central rod (27) is engaged with said turnbuckle sleeve (21c); and
(iii) a screwing rod (23c) having two ends wherein one end of said screwing rod is engaged with said turnbuckle sleeve (21c).

4. The utility corner shelf bracket (100) of claim 3, further comprising:
(e) a T rod (31) disposed on said screwing rod (21c); and
(f) two side rods (28) wherein each one of said side rods (28) is disposed on said T rod (31), and wherein a rotation of said turnbuckle sleeve (21c) changes said length of said pulling assembly (20).

5. The utility corner shelf bracket (100) of claim 4, further comprising:
(g) two first bow extender (11c), each one of said two first bow extenders (11c), is disposed on said first bow (11); and
(h) two strengthening ribs (30) each one of said two strengthening ribs (30) is disposed on different one of said first bow wings (11b).

6. The utility corner shelf bracket (100) of claim 2, further comprising:
(c) two pressing handles (36), wherein each one of said pressing handles (36) is disposed on one of said first bow wings (11b); and
(d) a second bow (12) having two ends, wherein each one of said ends of said second bow (12) is disposed on an element of said utility corner shelf bracket (100) selected from a group consisting of a first bow wing (11b), and a pressing handle (36), wherein said first bow (11) further includes:
(ii) a first bow arc (11a), wherein each one of said first bow wings (11b) is operatively connected to said first bow arc (11a).

7. The utility corner shelf bracket (100) of claim 6, further comprising:
(e) at least one strengthening rib (30) disposed on one of said first bow wings (11b).

8. The utility corner shelf bracket (100) of claim 6, further comprising: (f) at least one hanging device (37) disposed on said second bow (12).

9. The utility corner shelf bracket (100) of claim 6, wherein said first bow arc (11a) and said second bow (12) are springs, wherein in a free state said first bow arc (11a) has a bow arc bending angle (C) of at most ninety degrees and wherein said second bow (12) has a second bow bending angle (D) of at least forty degrees.

10. The utility corner shelf bracket (100) of claim 7, wherein said utility corner shelf bracket (100) is a one-piece device, wherein said utility corner shelf bracket (100) includes no connection means.

11. The utility corner shelf bracket (100) of claim 8, wherein said utility corner shelf bracket (100) is made of a polymer.

12. The utility corner shelf bracket (100) of claim 6, further comprising:
(e) at least one strengthening rib (30) disposed on one of said first bow wings (11b); and
(f) at least one hanging device (37) disposed on said second bow (12), wherein said first bow arc (11a) and said second bow (12) are springs, wherein in a free state said first bow arc (11a) has a bow arc bending angle (C) of at most ninety degrees and wherein said second bow (12) has a second bow bending angle (D) of at least forty degrees, said utility corner shelf bracket (100) is a one-piece device, wherein said utility corner shelf bracket (100) includes no connection means.

13. The utility corner shelf bracket (100) of claim 6, further comprising:
(e) two protective wings (60), wherein each one of said protective wings (60) has at least one protective wing hole (60a), wherein each one of said protective wings (60) has a protective wing connecting end (60b), wherein each one of said protective wing connecting ends (60b) is connected to said first bow (11), wherein said connection is configured to produce a moment force which tends to couple said protective wing (60) to another one of said first bow wings (11b); and
(f) two protective wing supports (61), wherein each one of said protective wing supports (61) has a protective wing support first end (61a), and a protective wing support second end (61b) wherein each one of said protective wing support first ends (61a) is connected to another one of said two pressing handles (36), wherein each one of said protective wing supports (61) is made of an elastic material, wherein each one of said pressing handles (36) has a handle groove (36a), wherein each one of said protective wing support second ends (61b) is configured to prevent another one of said protective wings (60) to move in with a tendency for coupling said protective wing (60) to another one of said first bow wing (11b), if there is applied an external force on said protective wing supports (61) and to gather, at least partially, into said another one of said handle grooves (36a) and cease from preventing another one of said protective wings (60) to move in a tendency for coupling said protective wing (60) to another one of said first bow wing (11b), if an external force is applied on said protective wing supports (61).

14. The utility corner shelf bracket (100) of claim 13, further comprising:
(g) at least one strengthening rib (30) disposed on one of said first bow wings (11b); and
(h) at least one hanging device (37) disposed on said second bow (12), wherein said first bow arc (11a) and said second bow (12) are springs, wherein in a free state said first bow arc (11a) has a bow arc bending angle (C) of at most ninety degrees and wherein said second bow (12) has a second bow bending angle (D) of at least forty degrees, said utility corner shelf bracket (100) being a one-piece device, wherein said utility corner shelf bracket (100) includes no connection means.
